# EUROPEAN PATENT APPLICATION

(11) **EP 4 660 662 A1**
(43) Date of publication of application: **10.12.2025**
(21) Application number: 24180469.9
(22) Date of filing: 06.06.2024
(51) Int. Cl.: G01S 7/481, G01S 17/894, G01S 17/931

(54) **ILLUMINATION DEVICE, FRONT-END STRUCTURE AND VISION SYSTEM FOR A MOTOR VEHICLE**

(71) Applicant: Magna Electronics Sweden AB, 447 37 Vårgårda (SE)
(72) Inventor: KÄLLHAMMER, Jan-Erik, 583 30 Linköping (SE)
(74) Representative: Müller Verweyen

(57) **Abstract**

The invention relates to an illumination device (10) for motor vehicle (22), wherein the illumination device (10) comprises at least one light source (11) which is adapted to emit light in the infrared range. The illumination device (10) is configured to emit a light beam or light cone (13) generated by the at least one light source (11) from at least two light emitting positions (12), wherein said light emitting positions (12) are spaced at least 5 cm apart from each other.

## Description

The invention relates to an illumination device for motor vehicle, wherein the illumination device comprises at least one light source which is adapted to emit light in the infrared range. Further, the invention relates to a front-end structure for a motor vehicle and vision system for a motor vehicle. Moreover, the invention relates to a method to control a corresponding vision system.

Modern motor vehicles often comprise advanced driver assistance systems (ADAS) or automated driving systems (ADS). The capabilities of such systems rely among other things on the detection of objects in front of the motor vehicle. Higher speeds of the motor vehicles, e.g. 130 km/h, require detection ranges of 150 m, wherein the ADAS or ADS must be able to detect small objects on the road which cannot be driven over. Such requirements are UN ECE R157, for example.

Existing detection systems, like LIDAR, struggle to achieve the required spatial resolution and are expansive. Camera based vision systems may achieve sufficient depth information and spatial resolution at a low cost. Nonetheless, the effective range of ADAS or ADS cameras is limited in darkness and low visibility conditions.

Improving the visibility by illumination the forward area of the vehicle to the required ranges is constrained in the wavelengths visible to humans by glare effects on oncoming traffic as well as by eye safety constraints in the infrared wavelengths regarding people in front of the vehicle.

It is the object of the invention to provide an illumination device for a motor vehicle, a front-end structure for a motor vehicle with an illumination device, and vision system for motor vehicle that enables improved detection ranges in low visibility conditions. It is further the object of the invention to provide a corresponding controlling method.

The invention solves this object with the features of the independent claims.

An illumination device for motor vehicle is proposed, wherein the illumination device comprises at least one light source which is adapted to emit light in the infrared range. It is proposed that the illumination device is configured to emit a light beam or light cone generated by the at least one light source from at least two light emitting positions, wherein said light emitting positions are spaced at least 5 cm apart from each other.

The illumination in the infrared range is outside the visible spectrum so that glare limitations do not have to be considered. Thus, light patterns comparable to high beam illumination can be used for an increased effective detection range of a camera of an ADAS/ADS system operating in the infrared spectrum in a dark environment. Further on, the spaced at least two emitting positions enable the illumination device to comply with any eye safety regulation, like IEC 60825-1 for class 1 laser or IEC 62471 for other light sources like LEDs while at the same time the illumination levels in front of a motor vehicle in a distance up to 150 m can be significantly improved. The illumination device has preferably at least four light emitting positions. This allows a good illumination level and thus a good detection range of an ADAS/ADS camera.

Due to the distance of the light emitting positions, the light beams or light cones do not superimpose in close proximity to their respective light emitting positions, thus superimposing or merging of two or more of the at least two light beams or light cones is at certain distance in front of a vehicle. In general, the power per area is proportional to the inverted squared distance, so that power per area or the intensity of light emitted from any of the light emitting positions is reduced by the square of the distance. Thereby, the merging of two or more light beams or light cones occurs only in a distance where the intensity of the light beam or light cone is reduced due to geometric reasons. Each light beam is preferably at a level below the eye safety limit, and the distance where the merging of two or more light beams occur is such that their combined intensity is also below the eye safety limit.

With the proposed illumination device, it is possible to comply with the eye safety limits and the maximum permissible exposure at any position in front of the illumination device, while it is also possible to illuminate objects in the field of view at distances greater than 100 m, e.g. 150 m, wherein light from multiple light emitting points can reach such an object, so that a sufficient illumination with infrared light of objects is possible. As a result, the detection range of an ADAS/ADS can be increased.

Preferably, the light beams or light cones are directed into the far field to illuminate an object more than 10 m, preferably more than 50 m, further preferably more than 100 m, away. Accordingly, the at least two light beams or cones are preferably aligned nearly parallel or parallel. As a result, it is not possible to hit an eye pupil of a person with more than one light beam or light cone in a position closer than 10 cm to any light emitting position.

Light beams are generally divergent, even laser light beams. Furthermore, light cones are divergent, thus the intensity is reduced with increased distance travelled. A light source is preferably an LED or laser diode.

In a preferred embodiment, the at least two light emitting positions are spaced at least 10 cm apart from each other with respect to a horizontal axis. Thereby, the position where light from two light emitting positions is superimposed can be at a greater distance from the respective light emitting positions. Thus, the respective light beams or light cones have a superimposing distance that is even further away from the light emitting position. It is further preferred that the at least two, preferably at least four, light emitting positions are spaced at least 10 cm apart from each other with respect to a vertical axis.

In a preferred embodiment, the opening angle of the light beams or light cones is smaller than 30°, preferably smaller than 15°. This is advantageous to illuminate an area in a far field and to superimposed the light beams or light cones emitted from light emitting positions at a greater distance from the illumination device.

Preferably, at least two of the at least two, preferably at least four, light emitting positions are at a distance of at least 50 cm from each other with respect to a horizontal axis. The illumination device can be spread over a wider area, so that the merging of light beams or light cones can be even further away from the illumination device.

Preferably, the at least two light beams or light cones superimpose at a distance larger than 200 mm from the respective light emitting positions. Thereby, the intensity of the superimposed light beams or light cones can be kept within the safety limits, also considering various manufacturing tolerances.

In advantageous embodiments, the light emitting positions form a distributed light source. A light emitting position is preferably an optical window and/or a lens, in particular an optical window and/or a lens with a diameter smaller than 5 mm. The light emitting positions can be sourced from a single light source or from multiple light sources, wherein light from the light source(s) can be guide by means of light guides, light pipes, and/or light bars. It is further possible to have apertures or emitting zones wherein prisms, micro-lens arrays, laser etching of fibers, and/or perturbations on the fiber surface are used.

In a preferred embodiment, each light emitting position is assigned to a respective light source. Thus, each light emitting position is sourced or operated by a dedicated light source which sources just one light emitting position in this advantageous embodiment.

Advantageously, each light emitting position is in accordance with IEC 60825-1 class 1 or IEC 62741. It is further preferred that each light source of the illumination device is in accordance with class 1 of IEC 60825-1 or IEC 62741 when a light source is assigned to just one light emitting position.

It is further preferred that the at least one light source is pulsed. This enables the illumination device to be used with gated cameras in an ADAS or ADS, so that the negative impact of fog or other adverse weather conditions due to backscattering in the field of view can be mitigated.

In a further advantageous embodiment, the light source or the light sources have a simultaneous optical continuous-wave (cw) power output of at least 0.4 mW, preferably at least 0.8 mW. Accordingly, a distant object that is 150 m away, for example, can be sufficiently illuminated by the proposed illumination device so that even small objects of 10 cm high can be detected by means of an ADAS/ADS camera.

Preferably, the light emitting positions are arranged asymmetrical with respect to a horizontal axis and/or a vertical axis, in particular of a front-end structure.

Further preferably, the light emitting positions are arranged in a different shape than the shape of an area illuminated by the illumination device. This is a useful design parameter considering, for example, that a laser diode as infrared light source has different beam shapes in the fast axis and the slow axis directions.

In order to solve the object of the invention, a front-end structure for a motor vehicle is proposed which comprises an illumination device as described above or according to claims 1 to 10.

The front-end structure comprises preferably a molded plastic part in which the illumination device is fastened. In preferred embodiments, optical openings or optical aperture are molded in the front structure by using optical film, for example. The front-end structure is preferably processed by film inserted injection molding. The optical film is preferably scratch resistant.

Further, the light sources of the illumination device are preferably molded, preferably insert molded, into the front-end structure for a motor vehicle.

Preferably, the front-end structure is a grille. The grille for a motor vehicle offers an area where the light emitting positions or light sources can be further distributed so more than 2, preferably more than 8, further preferably more than 16 light emitting positions or light sources of an illumination device can be integrated in the grille. In advantageous embodiments, the front-end structure for a motor vehicle can have the same color as the body color of the motor vehicle to be mounted on, and further preferably lighting in the visible range may create a signature lighting sign appearing on the front-end structure. The surface of the front-end structure is preferably water repellant by a hydrophobic and super hydrophobic treatment, for example.

In preferred embodiments, the grille has at least a width of 60 cm in a horizontal axis. Preferably, at least six light emitting positions or light sources of the illumination device can be arranged spaced apart from each other along a horizonal axis.

It is further preferred that the front-end structure comprises an infrared camera. This is beneficial for the alignment of the infrared camera with respect to the light emitting positions and the respective light beams or light cones. Additionally, the illumination device and the camera can be calibrated as a unit that can be fastened to a motor vehicle without the need for further calibration. The front-end structure or the grille can integrate a high level of functionality in a compact space.

In advantageous embodiments, the front-end structure has a heating element to keep the light emitting positions and/or other sensor elements or the camera ice and moisture free.

Preferably, the illumination device is adapted to illuminate the field of view of the infrared camera with at least two light beams or light cones from at least two light emitting positions, respectively.

Further, a vision system for a motor vehicle is proposed, wherein the vision system comprises an illumination device as described above or according to any one of the claims 1 to 10. The vision system comprises an infrared camera with a field of view that is in the range between 33x23 degree to 27x17 degree, preferably 30x20 degree, wherein the illumination device is adapted to illuminate the field of view of the infrared camera with at least two, preferably at least four, light beams or light cones from respective at least two, preferably at least four, light emitting positions. The infrared camera can be arranged in a front-end structure of a motor vehicle, in particular in a grille, or behind a windshield of the motor vehicle.

In a preferred embodiment, the at least one light source of the illumination device is adapted to be operated in a pulsed mode and the infrared camera is configured for gated imaging. Thereby, detecting small object of about 10 cm height is possible at 150 m distance even in dark and/or foggy or snowy conditions.

Further a method for controlling a vision system as described above or according to claim 16 is proposed, wherein the light source(s) are operated in a pulsed mode and the infrared camera is taking gated images of a scene illuminated by the light source(s) for a time-of-flight range between 20 m and 200 m, preferably between 50 m and 150 m. The light sources are preferably synchronized with an electronic shutter function in the infrared camera. With gated imaging, it is possible to capture an image of the scene in front of the camera that is limited to the distance of the scene time-of-flight distance of the camera's gate timing.

This allows to reduce any unwanted reflections or back-scatter from the light emitted by the illumination device at distances outside the range corresponding to the open gate timing. The gated imaging system also reduces disturbances generated by light from other sources in the environment in a captured image.

In the following the invention shall be illustrated on the basis of preferred embodiments with reference to the accompanying drawings. Therein shows:
- Fig. 1: a schematic front view of an illumination device with multiple light emitting positions and a common light source;
- Fig. 2: a schematic front view of an illumination device with multiple light sources;
- Fig. 3: a top view of an illumination device with four light cones superimposed at a superimposing distance;
- Fig. 4: a schematic front view of a front-end structure for a motor vehicle with an illumination system;
- Fig. 5: a schematic view of a vision system with of an illumination system and an infrared camera in a grille for a motor vehicle;
- Fig. 6: a schematic view of a vision system with of an illumination system and an infrared camera; and
- Fig. 7: a schematic top view of a motor vehicle on a road with an illumination system.

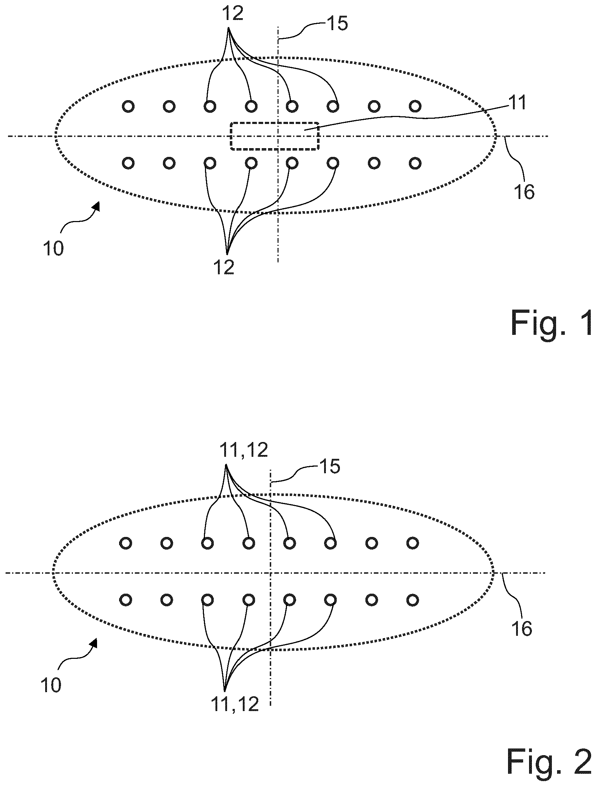

In Figure 1 an embodiment of an illumination device 10 for a motor vehicle 22 is schematically shown in a front view. The illumination device 10 comprises one infrared light source 11 which is adapted to emit light in the infrared range. The infrared light from the light source 11 is divided and transferred to at least two light emitting positions 12, in this embodiment sixteen light emitting positions 12. Other embodiments may have a different number of light emitting positions 12, for example, four, eight, twelve or more. The light emitting positions 12 of the illumination device 10 are spaced at least 5 cm apart from each other. Thus, the distance between two light emitting positions 12 is at least 5 cm. In this advantageous embodiment the light emitting positions 12 are spaced 10 cm apart from each other with respect to a horizontal axis 16. Furthermore, the light emitting positions 12 are spaced 10 cm apart from each other with respect to a vertical axis 15.

The light emitting positions 12 are arranged in two rows with eight light emitting positions 12 in each row. In alternative embodiments, other arrangements of the light emitting positions 12 are possible, for example, grid arrangement, staggered arrangement, equilateral triangle arrangement, or circumferential arrangement. There is no limit to the number of light emitting positions 12 in an arrangement of light emitting positions 12 and the number can be set as appropriate for technical aspects, like overall light power output without concerns regarding eye safety. A grid arrangement can be 8x2 or 6x4, for example.

In this embodiment, eight light emitting positions 12 are aligned parallel to a horizontal axis 16. The most right light emitting position 12 and the most left light emitting position 12 are 70 cm away in this embodiment, so that the light emitting positions 12 of the illumination device 10 are spread 70 cm in width and 10 cm in height.

Figure 2 shows another embodiment of an illumination device 10 for motor in a front view. In this embodiment to each light emitting position 12 an individual infrared light source 11 is assigned. The infrared light source 11 can be a laser diode or an LED. The light emitting positions 12 and the light sources 11 are spaced apart in the same way as in Figure 1.

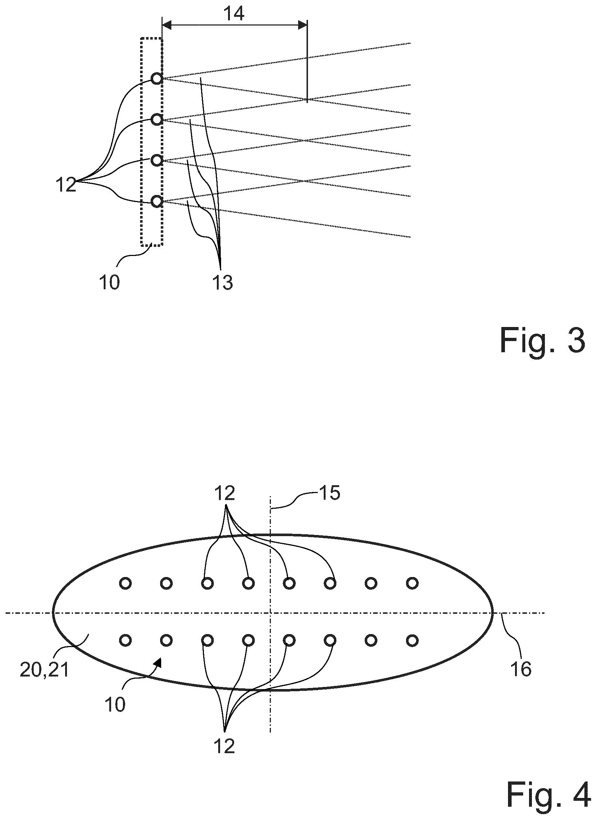

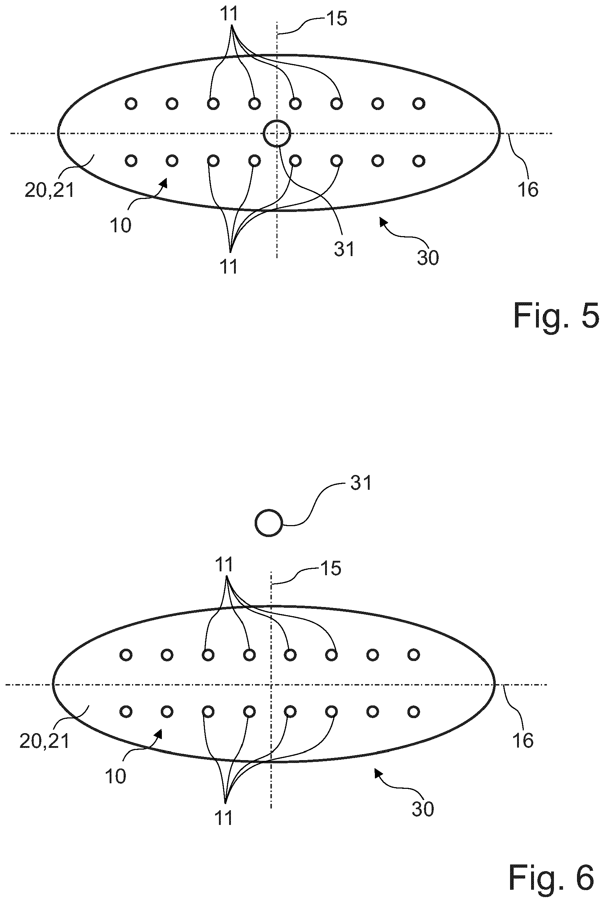

Figure 3 shows such an illumination device 10 in a top view, wherein the light beams or light cones 13 generated by the light source(s) 11 emerge from the light emitting positions 12. A light emitting positions 12 is preferably an optical window. Due to the spacing between the light emitting positions 12 and the opening angle of the light cones 13 which is smaller than 30°, the light cones 13 superimpose at a superimpose distance 14 of at least 200 mm. A longer superimpose distance 14 is better, so that the intensity of the light beams or light cones 13 is lower due to divergence before light beams or light cones 13 are superimposed in order to achieve high illumination levels in the far field in front of a motor vehicle 22. Thereby, requirements of IEC 60825-1 and IEC 62741 can be fulfilled while the illumination level in the far field, e.g. 150 m, can be increased to detect objects of 10 cm height with an infrared camera 31, see Figures 5 and 6.

Figure 4 shows an embodiment of a front-end structure 20 for a motor vehicle 22 with an illumination device 10 according one of the embodiments described above. The front-end structure 20 is preferably a grille 21 for a motor vehicle 22, in particular, a battery electric vehicle (BEV). In BEVs less cooling is needed so that the multiple functions can be easily integrated in the grille 21. The front-end structure 20 or the grille 21 offers a sufficient front area to spread the light emitting positions 12 sufficiently. Spreading the light emitting positions 12 is in particular possible along a horizontal axis 16 in a grille 21, for example in an 8x2 arrangement of the light emitting positions 12. The grille 21 has a width of 100 cm in this embodiment.

The front-end structure 20 with an illumination device 10 of Figure 4 is shown in Figure 5, wherein the front-end structure 20 comprises an infrared camera 31. The infrared camera 31 in this preferred embodiment has a narrow field of view of 30x20 degree, a resolution of 6M pixel and a frame rate of 20 Hz. The area illuminated by the illumination device 10, where multiple light beams or light cones 13 are superimposed, is preferably the sensing area of the infrared camera 31.

The illumination device 10 and the infrared camera 31 as shown in Figure 5 form a vision system 30.

Figure 6 shows another embodiment of a vision system 30, wherein the infrared camera 31 is not arranged in the front-end structure 20 or grille 21 for a motor vehicle 22. In this embodiment, the infrared camera 31 can be arranged behind a windshield of a motor vehicle 22.

The vision systems 30 of embodiments according to Figures 5 and 6 are advantageously configured to perform gated imaging, wherein the illumination device 10 is operated in a pulsed mode, so that the vision system 30 is adapted to capture gated images with a time-of-flight corresponding to a distance of 50 m to 150 m.

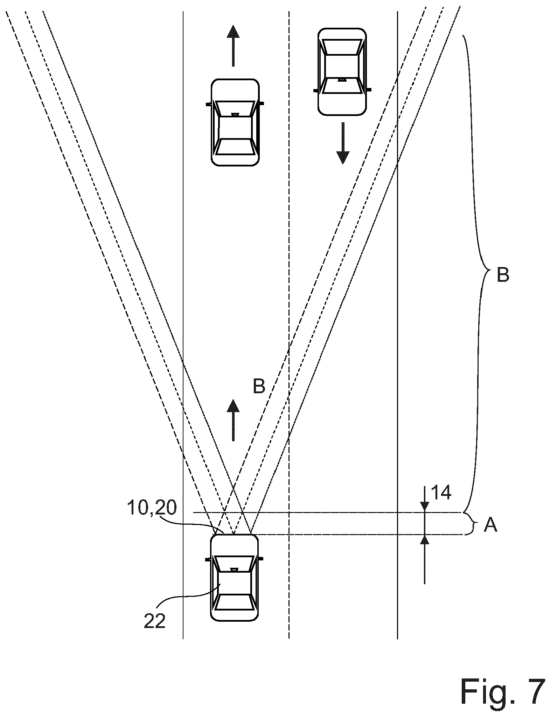

Figure 7 shows a motor vehicle 22 with an illumination device 10 that is arranged in a front-end structure 20 of the motor vehicle 22. The illuminated area is illustrated, whereby in this example three light cones 13 are emitted from three spaced light emitting positions 12 at the front-end structure 20. The light cones 13 do not overlap or superimpose in zone A. Zone B starts at a superimpose distance 14 from the light emitting positions 12, where the light beams or light cones 13 overlap and thus superimpose. In zone A as well as in zone B eye safety standards can be met while a good illumination with light in the infrared range can be achieved.

## Claims

1. Illumination device (10) for motor vehicle (22), wherein the illumination device (10) comprises at least one light source (11) which is adapted to emit light in the infrared range, **characterized in that** the illumination device (10) is configured to emit a light beam or light cone (13) generated by the at least one light source (11) from at least two light emitting positions (12), wherein said light emitting positions (12) are spaced at least 5 cm apart from each other.

2. Illumination device (10) according to claim 1, **characterized in that** the at least two light emitting positions (12) are spaced at least 10 cm apart from each other with respect to a horizontal axis (16).

3. Illumination device (10) according to claim 1 or 2, **characterized in that** the opening angle of the light beams or light cones (13) is smaller than 30°.

4. Illumination device (10) according to any one of the preceding claims, **characterized in that** the at least two light beams or light cones (13) superimpose at a superimpose distance (14) larger than 200 mm from the respective light emitting positions (12).

5. Illumination device (10) according to any one of the preceding claims, **characterized in that** each light emitting position (12) is assigned to a respective light source (11) .

6. Illumination device (10) according to any one of the preceding claims, **characterized in that** each light emitting position (12) is in accordance with IEC 60825-1 class 1 or IEC 62741.

7. Illumination device (10) according to any one of the preceding claims, **characterized in that** the at least one light source (11) is pulsed.

8. Illumination device (10) according to any one of the preceding claims, **characterized in that** the light source (11) or the light sources (11) have a simultaneous continuous-wave optical power output of at least 0.4 mW, preferably at least 0.8 mW.

9. Illumination device (10) according to any one of the preceding claims, **characterized in that** the light emitting positions (12) are arranged asymmetrical with respect to a horizontal axis (16) and/or a vertical axis (15).

10. Illumination device (10) according to any one of the preceding claims, **characterized in that** the light emitting positions (12) are arranged in a different shape than the shape of an area illuminated by the illumination device (10) .

11. Front-end structure (20) for a motor vehicle (22), **characterized in that** the front-end structure (20) comprises an illumination device (10) according to any one of the preceding claims.

12. Front-end structure (20) according to claim 11, **characterized in that** the front-end structure (20) is a grille (21) .

13. Front-end structure (20) according to claim 12, **characterized in that** the grille has at least a width of 60 cm in a horizontal axis (16).

14. Front-end structure (20) according to any one of claims 11 to 13, **characterized in that** the front-end structure (20) comprises an infrared camera (31).

15. Vision system (30) for a motor vehicle (22), **characterized in that** the vision system (30) comprises an illumination device (10) according to any one of the claims 1 to 10, wherein the vision system (30) comprises an infrared camera (31) with a field of view that is in the range between 33x23 degree to 27x17 degree, preferably 30x20 degree, wherein the illumination device (10) is adapted to illuminate the field of view of the infrared camera (31) with at least two light beams or light cones (13) from respective at least two light emitting positions (12).

16. Vision system (30) according to claim 15, **characterized in that** the at least one light source (11) of the illumination device (10) is adapted to be operated in a pulsed mode and the infrared camera (31) is configured for gated imaging.

17. Method for controlling a vision system (30) according to claim 16, **characterized in that** the light source(s) (12) are operated in a pulsed mode and the infrared camera (31) is taking gated images of a scene illuminated by the light source(s) (12) for a time-of-flight range between 20 m and 200 m, preferably between 50 m and 150 m.
